(19) Europäisches Patentamt
European Patent Office
Office européen des brevets

(11) **EP 4 679 656 A1**

(12) **EUROPEAN PATENT APPLICATION**
published in accordance with Art. 153(4) EPC

(43) Date of publication:
**14.01.2026 Bulletin 2026/03**

(21) Application number: 23953142.9

(22) Date of filing: **18.12.2023**

(51) International Patent Classification (IPC):
**H02J 3/00** (2026.01)  **G06Q 50/06** (2024.01)
**H02J 3/38** (2026.01)

(52) Cooperative Patent Classification (CPC):
**G06Q 50/06; H02J 3/00; H02J 3/38**

(86) International application number:
**PCT/JP2023/045367**

(87) International publication number:
**WO 2025/062668 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2023 JP 2023151529**

(71) Applicant: **GreenBank Corporation
Nagoya-shi, Aichi 451-0045 (JP)**

(72) Inventor: **SUKIGARA, Shigeki
Nagoya-shi, Aichi 451-0045 (JP)**

(74) Representative: **Scott, Stephen John
YUJA IP LAW
East Coast House
25 Skeldergate
York YO1 6DH (GB)**

(54) **POWER MANAGEMENT METHOD, POWER MANAGEMENT DEVICE, AND INFORMATION PROCESSING SYSTEM**

(57) A power management apparatus manages the amount of power supplied to a plurality of areas. The areas include one or more areas for which a power classification to be used on a priority basis is determined. The power classification is determined based on the mode of carbon dioxide emissions during power generation. A controller of the power management apparatus executes processing including acquiring an amount of power supplied from each of a plurality of power sources, acquiring an amount of power used in each of the plurality of areas, allocating the amount of power supplied from each power source to each area based on the power classification to be used on a priority basis in the one or more areas and the amount of power used in each area, and storing the power classification and the amount of power allocated to each area.

*FIG. 7*

**Description**

CROSS-REFERENCE TO RELATED APPLICATION

The present application claims priority to Japanese Patent Application No. 2023-151529 filed on September 19, 2023, the entire contents of which are incorporated herein by reference.

TECHNICAL FIELD

The present disclosure relates to power management methods, power management apparatuses, and information processing systems.

BACKGROUND

In recent years, there has been much talk of reducing emissions of carbon dioxide, a type of greenhouse gas, as a measure to combat global warming, which is believed to be the cause of climate change. In the manufacturing industry, there are many situations where consumers require that products be manufactured using power generated without emitting carbon dioxide. Typical examples of power that does not emit carbon dioxide include power derived from natural energy sources such as wind, solar, and biomass (biological resources).

Patent Literature (PTL) 1 discloses a technique for certifying that a storage battery has been charged with electricity generated using renewable energy. PTL 2 discloses a technique for outputting information on the actual amount of carbon dioxide emitted in the manufacturing process of a product or part.

CITATION LIST

Patent Literature

PTL 1: WO 2017/013982 A1
PTL 2: JP 2021-189566 A

SUMMARY

(Technical Problem)

However, conventional technology has room for improvement in allocating power to each area within a facility that uses both power generated without emitting carbon dioxide and power generated by emitting carbon dioxide. That is, with conventional technology, it has been difficult to certify that power generated without emitting carbon dioxide has been allocated as power for a specific area within a facility. As a result, when required to manufacture products and parts using only power for which carbon dioxide was not emitted, businesses are unable to meet this demand and end up missing out on business opportunities.

It is an aim of the present disclosure to make it possible to certify the usage, in a specific area within a facility, of power generated without emitting carbon dioxide.

(Solution to Problem)

According to one embodiment of the present disclosure, (1) a power management method is a power management method to be executed by a controller of a power management apparatus for managing an amount of power supplied to a plurality of areas, wherein the plurality of areas includes one or more areas for which a power classification to be used on a priority basis is determined, the power classification being one of a plurality of power classifications determined based on a mode of carbon dioxide emissions during power generation, the power management method comprising classifying power supplied from a plurality of power sources into any one of the power classifications, acquiring an amount of power supplied from each of the plurality of power sources, acquiring an amount of power used in each of the plurality of areas, allocating the amount of power supplied from each of the power sources to each of the plurality of areas based on the power classification to be used on a priority basis in the one or more areas and the amount of power used in each of the plurality of areas, and storing the power classification and the amount of power allocated to each area.

(2) In the power management method of (1), the power classifications may include a first classification of power that is derived from natural energy sources that do not emit carbon dioxide, a second classification of power that is generated by using fossil fuels and recovering the carbon dioxide that is produced during generation, and a third classification of power that is generated by using fossil fuels and emitting carbon dioxide.

(3) In the power management method of (2), the controller may calculate an expected amount of power usage that is expected to be used in the plurality of areas, acquire the power classification and amount of electric power for electric power stored in a storage battery connected to an electric circuit, and instruct the storage battery to discharge in a case in which the expected amount of power usage exceeds the amount of power supplied for at least one of the first classification of power and the second classification of power.

(4) In the power management method of (3), the controller may instruct the storage battery to charge in a case in which the amount of power supplied exceeds the expected amount of power usage for both the first classification of power and the second classification of power.

(5) In the power management methods of (2) to (4), the controller may set a priority of allocation for at least one of the first classification of power and the second classification of power to each of the plurality of areas, and allocate the power classification that is lacking in order starting with an area with highest priority in a case in which the amount of power used exceeds the amount of power supplied for at least one of the first classification of power and the second classification of power.

(6) In the power management method of (1), the controller may associate power supplied from the plurality of power sources with power allocated to each of the areas, and calculate an amount of carbon dioxide emissions derived from power in each area from an amount of power supplied from the plurality of power sources and allocated to each area and a carbon dioxide emission coefficient set for each power generation method or power company.

(7) In the power management method of (1), the controller manages power supplied to an electric vehicle used in association with one area in the plurality of areas together with the amount of power of the one area.

According to one embodiment of the present disclosure, (8) a power management apparatus is a power management apparatus for managing an amount of power supplied to a plurality of areas, the power management apparatus including a controller configured to execute processing, wherein the plurality of areas includes one or more areas for which a power classification to be used on a priority basis is determined, the power classification being one of a plurality of power classifications determined based on a mode of carbon dioxide emissions during power generation, wherein the processing comprises classifying power supplied from a plurality of power sources into any one of the power classifications, acquiring an amount of power supplied from each of the plurality of power sources, acquiring an amount of power used in each of the plurality of areas, allocating the amount of power supplied from each of the power sources to each of the plurality of areas based on the power classification to be used on a priority basis in the one or more areas and the amount of power used in each of the plurality of areas, and storing the power classification and the amount of power allocated to each area.

According to one embodiment of the present disclosure, (9) an information processing system is an information processing system including a power management apparatus for managing an amount of power supplied to a plurality of areas, wherein the power management apparatus comprises a controller, wherein the plurality of areas includes one or more areas for which a power classification to be used on a priority basis is determined, the power classification being one of a plurality of power classifications determined based on a mode of carbon dioxide emissions during power generation, wherein the controller executes processing comprising classifying power supplied from a plurality of power sources into any one of the power classifications, acquiring an amount of power supplied from each of the plurality of power sources, acquiring an amount of power used in each of the plurality of areas, allocating the amount of power supplied from each of the power sources to each of the plurality of areas based on the power classification to be used on a priority basis in the one or more areas and the amount of power used in each of the plurality of areas, and storing the power classification and the amount of power allocated to each area.

(Advantageous Effect)

According to one embodiment of the present disclosure, even if the power provided to a manufacturing facility such as a factory includes power other than power generated without emitting carbon dioxide, it is possible to certify the usage of power generated without emitting carbon dioxide for a specific area within the facility.

BRIEF DESCRIPTION OF THE DRAWINGS

In the accompanying drawings:

FIG. 1 is a diagram illustrating an example of a configuration of an information processing system according to an embodiment;

FIG. 2 is a diagram illustrating an example of a configuration of a facility that uses the power management apparatus of FIG. 1;

FIG. 3 is a block diagram illustrating an example of a configuration of the power management apparatus in FIG. 1;

FIG. 4 is a diagram illustrating an example of information, such as a priority power classification for each area, stored in the power management apparatus in FIG. 1;

FIG. 5 is a block diagram illustrating an example of a configuration of the measurement meter in FIG. 1;

FIG. 6 is a block diagram illustrating an example of the configuration of the power generation equipment in FIG. 2;

FIG. 7 is a flowchart illustrating an example of an operation performed by the power management apparatus in FIG. 1 when allocating power classifications to a plurality of areas;

FIG. 8 is a flowchart illustrating an example of the green power allocation process in FIG. 7;

FIG. 9 is a diagram illustrating an example of information such as a priority power classification for each area that is stored in the power management apparatus in FIG. 1 and that is used when allocating power classifications to a plurality of areas;

FIG. 10 is a diagram illustrating an example of information such as a priority power classification for each area that is stored in the power management apparatus in FIG. 1 and that is used when allocating power classifications to a plurality of areas;

FIG. 11 is a flowchart illustrating an example of operations performed by the power management apparatus in FIG. 1 when calculating the amount of carbon dioxide emissions for each of a plurality of areas; and

FIG. 12 is a flowchart illustrating an example of operations when the power management apparatus in FIG. 1 issues an instruction to a storage battery.

DETAILED DESCRIPTION

An embodiment of the present disclosure will be described below, with reference to the drawings. In each drawing, parts having the same configuration or function are labeled with the same reference numerals. In the description of the present embodiment, repetitive descriptions of the same parts may be omitted or simplified as appropriate.

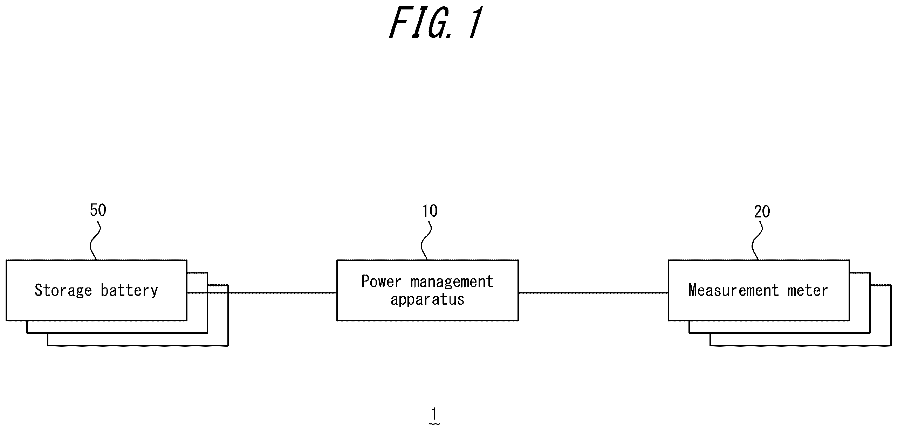

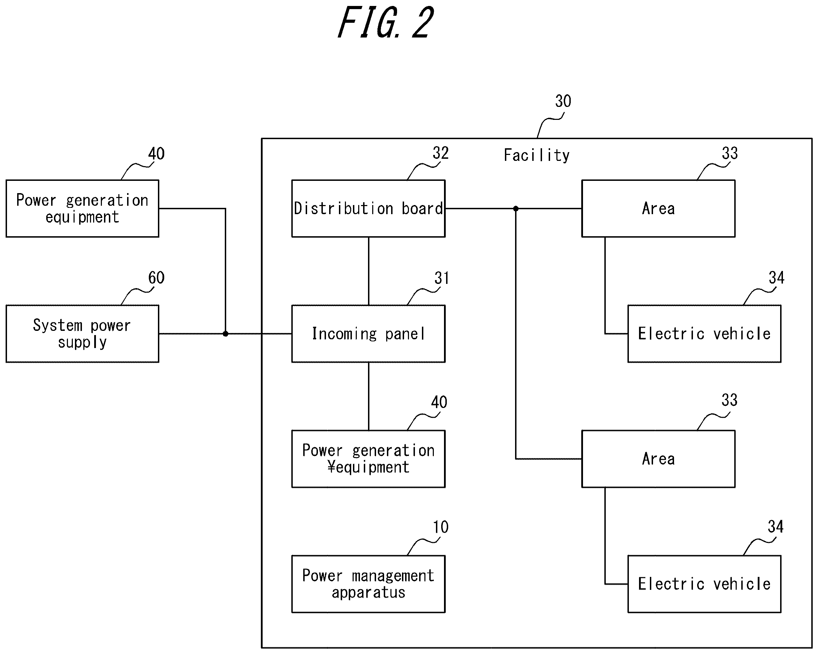

As illustrated in FIG. 1, the information processing system 1 includes a power management apparatus 10, a measurement meter 20, and a storage battery 50. The power management apparatus 10, the measurement meter 20, and the storage battery 50 may be connected to each other via a network so that they can communicate with each other. FIG. 2 illustrates an example of a configuration of a facility to which the information processing system 1 is applied. The information processing system 1 is a system that uses the power management apparatus 10 to monitor the power supplied to a facility 30 and the power used in each area 33 within the facility 30, and records and outputs the monitoring results.

The power management apparatus 10 of the present embodiment virtually allocates the power supplied to the facility 30 to each area according to the power classification. The amount of power used in each area for each power classification is considered to be the amount of power used for each power classification of this virtually allocated power. Therefore, if it is required that only green power be used in an area 33, for example, the power management apparatus 10 allocates green power on a priority basis as the power to be supplied to the area 33. The power management apparatus 10 can certify the amount of power used for each power classification in each area by recording the power classification of the power allocated to each area and the amount of power used. For example, in the area 33 where the use of only green power is required, it becomes possible to certify that only green power has been used.

(Configuration of power management apparatus 10)

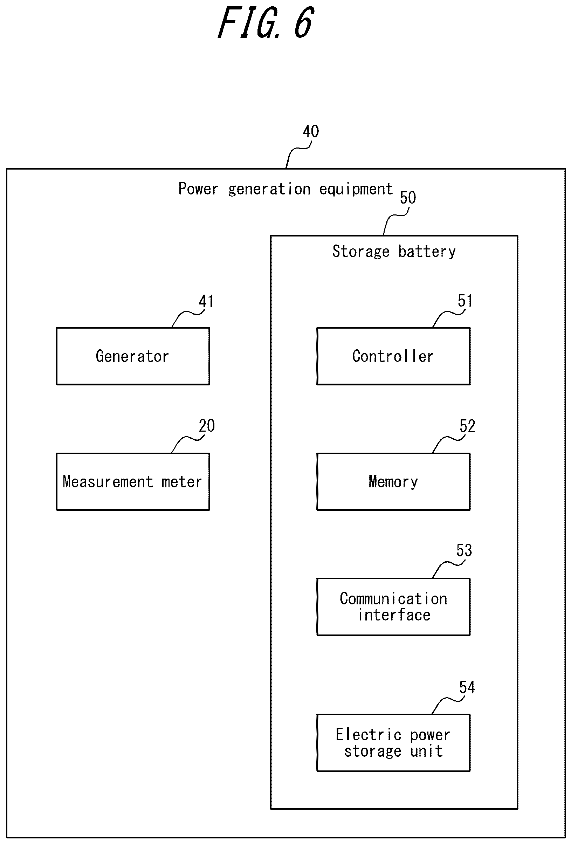

The power management apparatus 10 will now be described with reference to FIGS. 1 to 4. The power management apparatus 10 is a device that manages the amount of power supplied to a plurality of areas 33. As illustrated in FIG. 1, the power management apparatus 10 collects information from a measurement meter 20, processes the information, and stores and/or outputs the information. The power management apparatus 10 may also acquire information from a storage battery 50 (see FIG. 6) in the power generation equipment 40 of FIG. 2 and issue instructions for charging or discharging. The power management apparatus 10 is, for example, a general-purpose computer such as a WS (Work Station) or PC (Personal Computer) installed in a facility such as a data center, but may also be realized by a dedicated electronic device. The power management apparatus 10 may be a server that belongs to a cloud computing system or the like. The power management apparatus 10 may read a dedicated program to execute the processes of the present disclosure. The power management apparatus 10 is not limited to a single computer. The functions of the power management apparatus 10 may be located in the same or distributed locations.

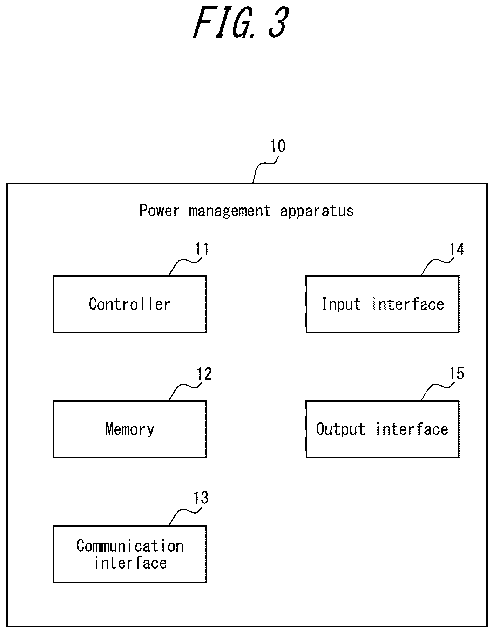

As illustrated in FIG. 3, the power management apparatus 10 includes a controller 11, a memory 12, a communication interface 13, an input interface 14, and an output interface 15.

The controller 11 executes various processes related to the operation of the power management apparatus 10 and controls each component of the power management apparatus 10. The controller 11 includes at least one processor, at least one dedicated circuit, or a combination thereof. The processor is a general-purpose processor such as a Central Processing Unit (CPU) or a Graphics Processing Unit (GPU), or a dedicated processor that is dedicated to specific processing. The controller 11 executes a program stored in the memory 12 to realize a control function.

The memory 12 includes at least one semiconductor memory, at least one magnetic memory, at least one optical memory, or a combination of at least two of these. The memory 12 functions as, for example, a main storage device, an auxiliary storage device, or a cache memory. The memory 12 stores, for example, programs and data used in the operation of the power management apparatus 10 and data obtained by the operation of the power management apparatus 10. The information stored in the memory 12 may be updatable with information input via the input interface 14, for example.

The memory 12 stores power classification information and power allocation results. The power classification information includes information on the power classification supplied from power sources including the power generation equipment 40 and the grid power supply 60 in FIG. 6, and information on the power classification used on a priority basis in the area 33. The power classification is determined based on the mode of carbon dioxide emissions during power generation. The power classifications include three classifications: a first classification of power that is derived from natural energy sources that do not emit carbon dioxide, a second classification of power that is generated by using fossil fuels and recovering the carbon dioxide that is produced during generation, and a third classification of power that is generated by using fossil fuels and emitting carbon dioxide. The first classification of power is called green power, the second classification of power is called blue power, and the third classification of power is called gray power. The power allocation result includes information associating the amount of power used by each area 33 with the power classification. The power classification to be used on a priority basis may be, for example, selectable from "use green power or blue power" or "use any type of power", or may be selectable from three types, including "use only green power". The category "use green power or blue power" may be set to give priority to blue power when both green power and blue power are available.

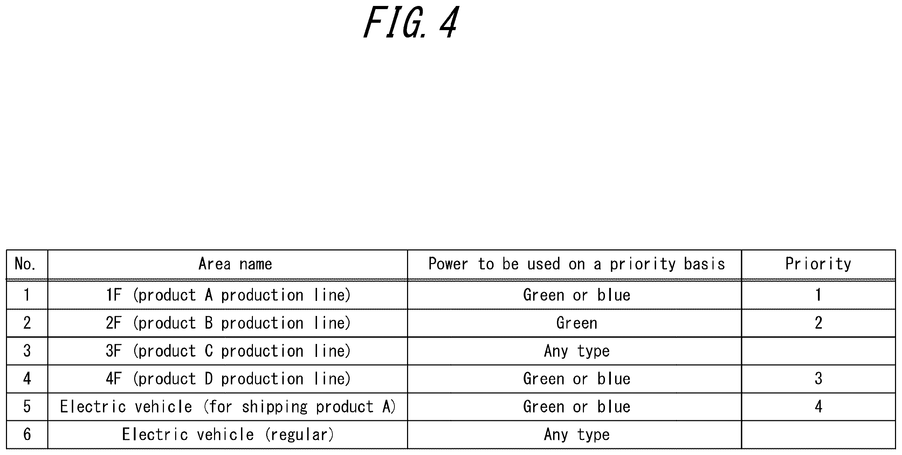

The memory 12 further stores a supply priority of the power classification that is suitable for each area 33. The supply priority may be determined by ranking, as illustrated in FIG. 4, or may be determined by setting multiple levels of priority (for example, three levels).

The memory 12 may further store a first required ratio, which is the minimum ratio of green power or blue power required by each area 33, and a second required ratio, which is the target ratio of green power or blue power for each area 33. The supply priority may be different between the first required ratio and the second required ratio, or the supply priority of the second required ratio may be higher than the supply priority of the first required ratio in other areas.

The memory 12 may store each piece of power generation equipment 40 and grid power supply 60 in association with a carbon dioxide emission coefficient. The carbon dioxide emission coefficient is an index that indicates the amount of carbon dioxide emitted by supplying 1 kWh of electricity. The carbon dioxide emission coefficient may be set for each power generation method or each power company.

The communication interface 13 includes at least one external communication interface that connects to the measurement meter 20 directly or via a network. The external communication interface may be either a wired or wireless communication interface. Instead of being provided in the power management apparatus 10, the communication interface 13 may be connected to the power management apparatus 10 as an external communication device. The communication interface 13 may be connected to the storage battery 50 directly or via a network.

The input interface 14 includes an input means for the power management apparatus 10. The input interface 14 includes physical keys such as a keyboard, capacitance keys, a pointing device, and a touch screen that is integrated with a display. The input interface 14 is used when an operator of the power management apparatus 10 directly inputs instructions to the power management apparatus 10.

The output interface 15 includes at least one output device. The output device is, for example, a display or a printer. The display is, for example, an LCD (Liquid Crystal Display) or an organic EL (Electro Luminescent) display. The output interface 15 outputs the calculation results from the controller 11 and the information stored in the memory 12.

The functions of the power management apparatus 10 are realized by executing a program relating to the method of the present disclosure on a processor corresponding to the controller 11. That is, the functions of the power management apparatus 10 are realized by software. The program causes a computer to execute the operations of the power management apparatus 10, thereby causing the computer to function as the power management apparatus 3. That is, the computer functions as the power management apparatus 10 by executing the operations of the power management apparatus 10 in accordance with the program.

In the present embodiment, the program can be recorded on a computer readable recording medium. The computer readable recording medium includes a non-transitory computer readable medium, such as a magnetic recording device, an optical disk, a magneto-optical recording medium, or a semiconductor memory.

In FIG. 2, the power management apparatus 10 is installed inside the facility 30, but the present disclosure is not limited to this. For example, the power management apparatus 10 may be installed in a data center or the like outside the facility premises.

(Configuration of the measurement meter 20)

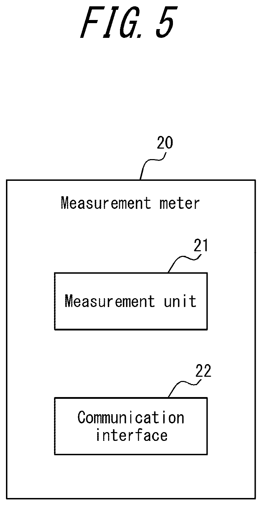

The measurement meter 20 will now be described with reference to FIG. 5. The measurement meter 20 is an electricity meter. The measurement meter 20 includes a measurement unit 21 and a communication interface 22. The measurement meter 20 is connected to the power management apparatus 10 via a communication interface 22 in a wired or wireless manner. The measurement meter 20 and the power management apparatus 10 may be connected via a network.

The measurement unit 21 is an electronic electricity meter. The measurement unit 21 can be installed in an electrical circuit and incoming panel 31, a distribution board 32, and each area 33 and piece of power generation equipment 40. Via the measurement meter 20, the measurement unit 21 measures the amount of power supplied to the facility from each power source and piece of power generation equipment, as well as the amount of power supplied to each area within the facility.

The communication interface 22 includes at least one external communication interface. The external communication interface may be either a wired or wireless communication interface. The communication interface 22 transmits the amount of power measured by the measurement unit 21 to the power management apparatus 10.

(Configuration of facility 30)

An example of the facility 30 will now be described with reference to FIG. 2. The facility 30 consumes the power supplied from the power generation equipment 40 and the grid power supply 60 and includes a factory where products and parts are produced. The facility 30 includes the incoming panel 31, the distribution board 32, and the plurality of areas 33. The facility may include the power generation equipment 40.

The incoming panel 31 is equipment that converts the power supplied from the power generation equipment 40, storage battery 50, and grid power supply 60 outside or inside the facility into a voltage and frequency that can be used within the facility. The incoming panel 31 includes a measurement meter 20 and measures the amount of power supplied from the power generation equipment 40, the storage battery 50, and the grid power supply 60 outside or inside the facility.

The distribution board 32 is equipment that distributes the power converted by the incoming panel 31 to each area 33. The distribution board 32 may be provided with a measurement meter 20 to measure the amount of power supplied from the incoming panel 31 and the amount of power distributed to each area 33.

The area 33 is an area including manufacturing equipment and the like that use the power distributed by distribution board 32. The area 33 is, for example, a manufacturing line for products or parts. The area 33 may include electric vehicles 34 and their charging equipment. The electric vehicles 34 include those used to transport products and parts manufactured at the facility and raw materials required for manufacturing, and for employees to commute to and from work. The area 33 may be equipped with a measurement meter 20 to measure the amount of power distributed by the distribution board 32.

(Configuration of power generation equipment 40)

The power generation equipment 40 will be described below with reference to FIG. 6. The power generation equipment 40 is a private power generation device owned by a business operator. The power generation equipment 40 includes a generator 41 and a measurement meter 20. The power generation equipment 40 may include a storage battery 50. The power generation equipment 40 may be installed inside or outside the facility 30.

The generator 41 may be a stationary generator. The generator 41 may be not only a power generating system that uses renewable energy such as solar power or wind power, but also a power generating system that uses fossil fuels and emits carbon dioxide. The generator 41 may be connected to a storage battery 50.

(Configuration of storage battery 50)

The storage battery 50 will now be described with reference to FIG. 6. The storage battery 50 may be a stationary battery. The storage battery 50 includes a controller 51, a memory 52, a communication interface 53, and an electric power storage unit 54. The storage battery 50 may communicate with the power management apparatus 10 constantly or at regular intervals via a wired or wireless connection or a network. The storage battery 50 may be provided separately from the power generation equipment 40.

The controller 51 includes at least one processor, at least one dedicated circuit, or a combination thereof. The processor is a general-purpose processor, such as a CPU or a GPU, or a dedicated processor that is dedicated to specific processing. The controller 51 performs various controls related to the operation of the storage battery 50 and generates information such as the remaining amount of power to be transmitted to the power management apparatus 10. The controller 51 may control the reception of power from the generator 41 and the transmission of power to the facility 30.

The memory 52 includes at least one semiconductor memory, at least one magnetic memory, at least one optical memory, or a combination of at least two of these. The memory 52 functions as, for example, a main storage device, an auxiliary storage device, or a cache memory. The memory 52 stores, for example, programs and data used in the operation of the storage battery 50 and data obtained by the operation of the storage battery 4. The information stored in the memory 52 may be updatable, for example, with information acquired from a network via the communication interface 53.

The memory 52 further stores the remaining amount of electric power in the electric power storage unit 54. The memory 52 may store various information required for the controller 51 to control the storage battery 50.

The communication interface 53 includes at least one external communication interface that connects to the power management apparatus 10 directly or via a network. The external communication interface may be either a wired or wireless communication interface. The communication interface 53 may be connected to the storage battery 50 as an external communication device instead of being provided in the storage battery 50. The communication interface 53 transmits the remaining amount of electric power of the storage battery 50 to the power management apparatus 10 under the control of the controller 51.

The electric power storage unit 54 is formed by at least one secondary battery. The electric power storage unit 54 may include a plurality of storage battery cells. The electric power storage unit 54 is also called a battery or a battery module. The electric power storage unit 44 includes a lithium ion battery but is not limited to this example. The electric power storage unit 54 may include storage batteries available currently and in the future, including lead-acid batteries, nickel-metal hydride batteries, sodium-sulfur batteries, lithium-sulfur batteries, magnesium batteries, and all-solid-state batteries.

(Example of information processing method)

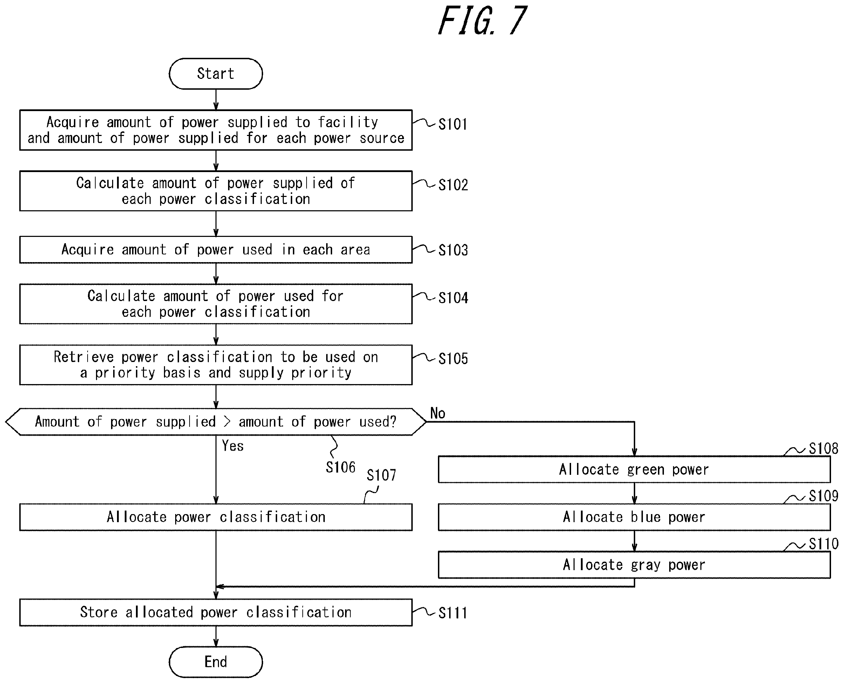

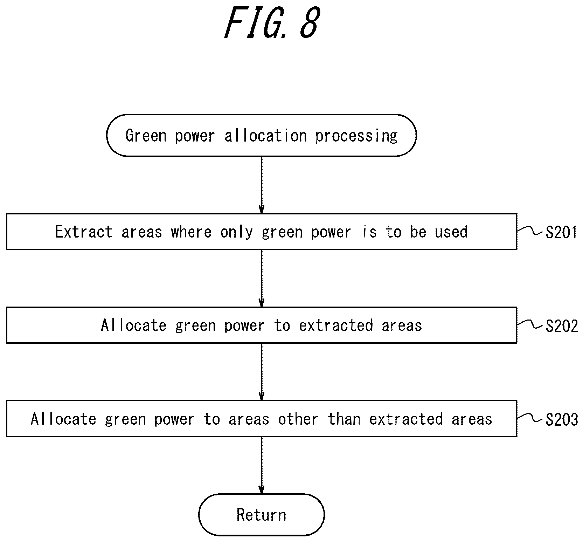

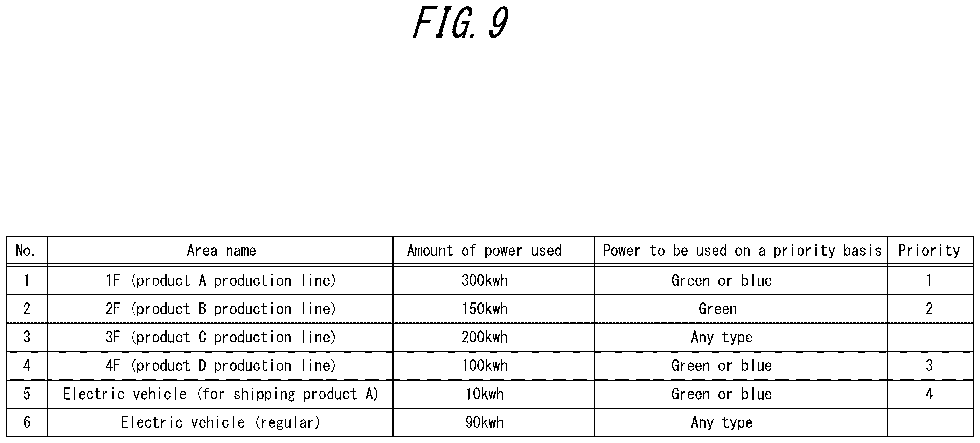

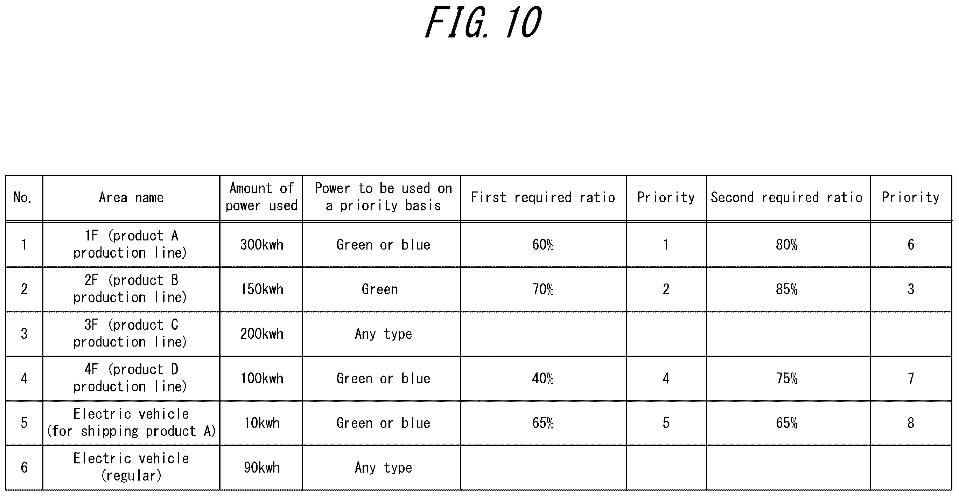

Hereinafter, an information processing method of the power management apparatus 10 according to the present embodiment having the above configuration will be described with reference to FIGS. 7 to 10. FIGS. 7 and 8 illustrate an example of the operation when the power management apparatus 10 allocates power classifications to a plurality of areas. FIGS. 9 and 10 illustrate examples of storage of information, such as priority power classification for each area 33, used when allocating power classifications to a plurality of areas 33. FIGS. 9 and 10 are diagrams created to illustrate examples, and the values of the amount of power used and the like do not reflect actual examples. The power management apparatus 10 may be configured to implement the processing performed by the controller 11 described below by reading a program recorded on a non-transitory computer readable medium. Non-transitory computer readable media include, but are not limited to, magnetic storage media, optical storage media, magneto-optical storage media, and semiconductor storage media. The processing described below may be performed at regular intervals, for example, every second or shorter, or every minute, hour, day, or month.

First, the controller 11 acquires the amount of power supplied to the facility 30 and the amount of power supplied by each power source from the measurement meter 20 installed in the incoming panel 31, the power generation equipment 40, and the grid power supply 60 via the communication interface 13 (step S101).

The controller 11 calculates the amount of power supplied for each power classification based on the amount of power supplied for each power source acquired in step S101 and the power classification associated with each power source that is stored in advance in the memory 12 (step S102).

Next, the controller 11 acquires the amount of power used in each area 33 from the measurement meter 20 installed in the area 33 via the communication interface 13 (step S103).

The controller 11 calculates the amount of power used for each power classification based on the amount of power used for each area as acquired in step S103 and the power classification to be used on a priority basis associated with each area as stored in advance in the memory 12 (step S104). In the example of FIG. 9, the amount of power used for each power classification is 460 kWh for green power, 100 kWh for blue power, and 290 kWh for gray power.

The controller 11 retrieves information on the power classification to be used on a priority basis and the supply priority from the memory 12 (step S105).

The controller 11 compares the amount of power supplied as calculated in step S102 with the amount of power used as calculated in step S104 for each of green power and blue power (step S106). In a case in which the amount of power supplied exceeds the amount of power used (step S106: Yes), the controller 11 proceeds to step S107. Otherwise (step S106: No), the controller 11 proceeds to step S108. For example, in FIG. 9, in a case in which 460 kWh or more of green power and 100 kWh or more of blue power are supplied, the process proceeds to step S107, whereas if either condition is not met, the process proceeds to step S108.

In a case in which, as a result of the comparison, the amount of power supplied for both green power and blue power exceeds the amount of power used, the controller 11 assumes, based on the information acquired in step S105, that power of the power classification to be used on a priority basis associated with each area has been supplied, and allocates the power classification and the amount of the power used to the area (step S 107). In the example in FIG. 9, 300 kWh, 150 kWh, and 10 kWh of green power are allocated to Nos. 1, 2, and 5 respectively, 100 kWh of blue power is allocated to No. 4, and 200 kWh and 90 kWh of blue power are allocated, regardless of the power classification, to Nos. 3 and 6 respectively.

In step S106, in a case in which the amount of power used exceeds the amount of power supplied for either green power or blue power, the controller 11 refers to the supply priority for areas where the power classification to be used on a priority basis is set to green power or blue power from the information acquired in step S105, and allocates green power in order starting with the area with the highest supply priority (step S108). In a case in which the amount of power supplied is insufficient for green power, blue power is allocated to areas to which allocation has not yet been completed, in order starting with the area with the highest supply priority (step S109). In a case in which there is a shortage of both green power and blue power, gray power is allocated to areas for which allocation has not been completed (step S110).

The controller 11 stores the amount of power and the power classification allocated to each area in steps S107 to S110 in the memory 12 (step S111).

Regarding the information on the power classification to be used on a priority basis obtained in step S107, in a case in which the power classification to be used on a priority basis set for each area 33 includes a category called "use of green power only", the controller 11 may execute the processing of step S108 according to the following procedure illustrated in FIG. 8.

The controller 11 extracts the area 33 where "only green power is to be used" from the information acquired in step S105 (step S201).

The controller 11 refers to the supply priority of the areas extracted in step S201 and allocates green power in order starting with the area with the highest supply priority (step S202).

Thereafter, the controller 11 refers to the supply priority for the areas not extracted in step S201 and allocates green power in order starting with the area with the highest supply priority (step S203).

In the case of performing the above procedure, the controller 11 may proceed to step S109 after completing steps S201 to S203. In step S111, the controller 11 stores the amount of power and the power classification allocated to each area in steps S107, S109, S110, S202, and S203 in the memory 12.

In the example in FIG. 9, when the amounts of supplied power are 400 kWh for green power, 160 kWh for blue power, and 290 kWh for gray power, the controller 11 first extracts No. 2, an area that prioritizes the use of green power and uses only green power (step S201), and allocates 150 kWh of green power (step S202). Next, the controller 11 determines whether to allocate green power to No. 1, which has the highest priority among the areas (No. 1, 3 to 6) to which no power classification has been assigned in step S108. The controller 11 compares the remaining amount of green power supplied, 250 kWh, with the amount of power used by No.1, 300 kWh. Here, the amount of power used exceeds the remaining amount of power supplied, so the controller 11 allocates 250 kWh of green power to No. 1 (step S203). As a result, there is a shortage of green power, so the controller 11 determines whether to allocate blue power to No. 1. The controller 11 compares the supply of blue power, 160 kWh, with the 50 kWh for which allocation has not been completed among the amount of power used by No. 1. Here, the amount of power supplied exceeds the amount of power used, so the controller 11 allocates 50 kWh of blue power to No. 1 (step S109).

When gray power is supplied in step S110 to an area where the power classification to be used on a priority basis is "green power or blue power", or when blue power or gray power is supplied in step S201 to an area where the power classification to be used on a priority basis is "green power only", the controller 11 may instruct the output interface 15 to issue a warning.

Furthermore, the allocation of green power or blue power in steps S108, S109, S202, and S203 may be performed taking into consideration the priority of the first required ratio and the second required ratio. For example, in a case in which step S108 is performed in the example of FIG. 10, green power may be allocated in the following order: 180 kWh to No. 1, 105 kWh to No. 2, and 22.5 kWh to No. 2.

Through the above procedures, the power management apparatus 10 can allocate power generated without emitting carbon dioxide to specific areas within the facility, even if the power supplied to the facility includes power other than power generated without emitting carbon dioxide. Furthermore, by steps S108 to S110 and S201 to S203, the power management apparatus 10 can supply the minimum amount of green power or blue power required to a specific area within the facility even if sufficient green power or blue power is not being supplied.

The present disclosure is also effective in calculating supply chain emissions, which is one criterion for a company's environmental efforts. Supply chain emissions refer to "greenhouse gas emissions generated not only from a company's business operations, but also from the entire process, including raw material procurement, manufacturing, logistics, sales, and disposal", and are divided into three categories, Scope 1 to 3, depending on how emissions occur. Scope 1 refers to "direct greenhouse gas emissions by the business itself (for example, greenhouse gases produced by combustion in manufacturing equipment)," Scope 2 refers to "indirect emissions associated with the use of electricity, heat, and steam supplied from outside the company", and Scope 3 refers to "emissions other than Scope 1 and 2". Scope 1 and 2 are positioned as emissions within the company, and Scope 3 as emissions outside the company. For example, when green power falls below the amount of power used, gray power can be supplied in the present disclosure to equipment such as an electric vehicle (Scope 3) that corresponds to an area requiring green power, and green power can be allocated to the area itself (Scope 1 or 2). This allows supply chain emissions to be concentrated in Scope 3, and Scope 1 and 2 emissions to be reduced or eliminated.

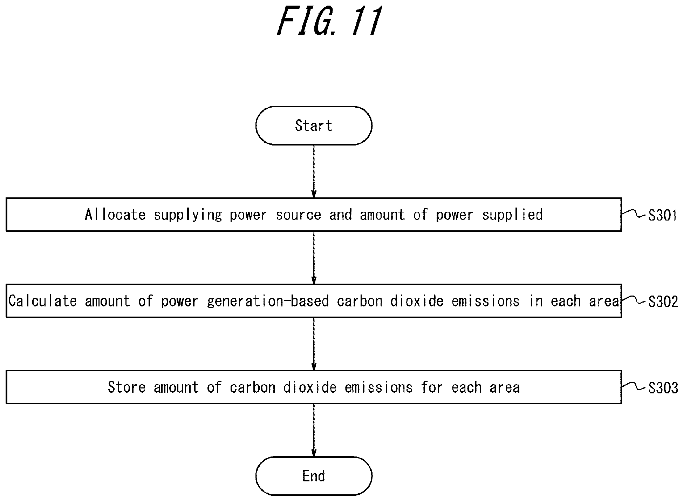

Next, a method of calculating the amount of carbon dioxide emissions for each area 33 will be described with reference to FIG. 11. When allocating a power classification to each area in steps S106, S108, S109, and S201, the controller 11 may also allocate a supplying power source and an amount of power supplied (step S301). In this case, the controller 11 may calculate the amount of power generation-based carbon dioxide emissions in an area from the supplying power source, the amount of power supplied, and the carbon dioxide emission coefficient corresponding to the power source as stored in advance in the memory 12 (step S302). The controller 11 may store the amount of carbon dioxide emissions for each area as calculated in step S302 in the memory 12 (step S303).

Through the above procedures, the power management apparatus 10 can calculate the amount of carbon dioxide emitted from the power used in a specific area. The about processing may be performed at regular intervals, for example, every second or shorter, or every minute, hour, day, or month.

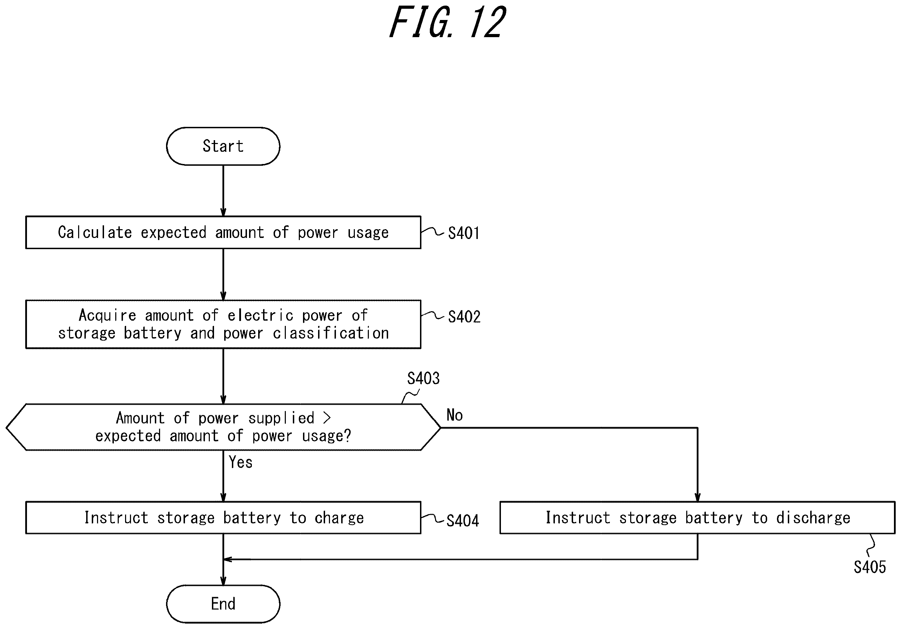

Next, a method of issuing instructions to charge and discharge the storage battery 50 will be described with reference to FIG. 12. The processing described below may be performed at regular intervals, for example, every second or shorter, or every minute, hour, day, or month.

The controller 11 calculates the expected amount of power usage that is expected to be used in each area from data, inputted from the input interface 14 or previously stored in the memory 12, on past product production volume and amount of power used (step S401). The data used as the basis for calculating the expected amount of power usage is not limited to the above. For example, the predicted amount of power usage may be calculated using machine learning data.

The controller 11 acquires the power classification and the amount of electric power for the electric power stored in the storage battery 50 connected to the electrical circuit (step S402).

The controller 11 compares the expected amount of power usage calculated in step S401 with the amount of power supplied as calculated in step S102 for each of green power and blue power (step S403).

In a case in which, as a result of the comparison, the amount of power supplied for both green power and blue power exceeds the expected amount of power usage (step S403: Yes), the controller 11 instructs the storage battery 50 to charge using the green power or blue power supplied from the generator 41 connected to the storage battery, within a range that does not exceed an amount of surplus power expressed by formula (a) (step S404). It should be noted that the amount of power supplied and the expected amount of power usage in the following formula (a) are limited to green power and blue power.

Amount of power supplied (kWh) - expected amount of power usage

$$(kWh) = \text{amount of surplus power (kWh)} \qquad \text{Formula (a)}$$

In step S403, in a case in which the expected amount of power usage of green power and blue power exceeds the amount of power supplied (step S403: No), the controller 11 instructs the storage battery 50 to discharge the electric power stored in the electric power storage unit 54 within a range that does not exceed the amount of electric power that can be discharged (step S405). Specifically, the dischargeable amount of electric power is a certain amount of electric power in the remaining amount of electric power, for example, the amount of electric power when discharging while maintaining the minimum amount of electric power for preventing over-discharge.

As described above, the power management apparatus 10 can increase the supply of power in response to increased demand for power with a power classification of green power, blue power, or the like, which is used on a priority basis in each area, by instructing the storage battery 50 to discharge or charge based on the expected amount of power usage and the amount of power supplied in each area. This enables the requirements for the power classification to be used on a priority basis in each area to be met.

As described above, according to the present embodiment, the power management apparatus 10 can record the power classification assigned to each area of the facility and the amount of power generation-based carbon dioxide emissions in each area at regular intervals. This enables the power management apparatus 10 to certify the usage status of power generated without emitting carbon dioxide and the amount of power generation-based carbon dioxide emissions for a specific area within the facility based on the recorded information. Furthermore, together with the amount of power used in each area, the power management apparatus 10 also manages the power supplied to electric vehicles by monitoring the charging equipment that supplies power to the electric vehicles used in association with each area. This will also make it possible to certify the amount of power generation-based carbon dioxide emissions from transporting products and raw materials and from employee commuting.

The present disclosure is not limited to the above-described embodiments, and many modifications and variations are possible. For example, functions or the like included in each component, each step, or the like can be rearranged without logical inconsistency, and a plurality of components, steps, or the like can be combined into one or divided. For example, the configuration and operation of the power management apparatus 10 may be distributed among a plurality of computers and network storage devices that can communicate with each other. Furthermore, for example, part of the configuration and operations of the power management apparatus 10 may be provided in the storage battery 50 or the like. Such embodiments are also to be understood as included in the scope of the present disclosure.

REFERENCE SIGNS LIST

| 1 | Information processing system |
|---|---|
| 10 | Power management apparatus |
| 11 | Controller |
| 12 | Memory |
| 13 | Communication interface |
| 14 | Input interface |
| 15 | Output interface |
| 20 | Measurement meter |
| 21 | Measurement unit |
| 22 | Communication interface |
| 30 | Facility |
| 31 | Incoming panel |
| 32 | Distribution board |
| 33 | Area |
| 34 | Electric vehicle |
| 40 | Power generation equipment |
| 41 | Generator |
| 50 | Storage battery |
| 51 | Controller |
| 52 | Memory |
| 53 | Communication interface |
| 54 | Electric power storage unit |
| 60 | Grid power supply |

**Claims**

1. A power management method to be executed by a controller of a power management apparatus that manages an amount of power supplied to a plurality of areas,

wherein the plurality of areas includes one or more areas for which a power classification to be used on a priority basis is determined, the power classification being one of a plurality of power classifications determined based on a mode of carbon dioxide emissions during power generation,
the power management method comprising:

classifying power supplied from a plurality of power sources into any one of the power classifications;
acquiring an amount of power supplied from each of the plurality of power sources;
acquiring an amount of power used in each of the plurality of areas;
allocating the amount of power supplied from each of the power sources to each of the plurality of areas based on the power classification to be used on a priority basis in the one or more areas and the amount of power used in each of the plurality of areas; and
storing the power classification and the amount of power allocated to each area.

2.  The power management method according to claim 1, wherein the power classifications include a first classification of power that is derived from natural energy sources that do not emit carbon dioxide, a second classification of power that is generated by using fossil fuels and recovering the carbon dioxide that is produced during generation, and a third classification of power that is generated by using fossil fuels and emitting carbon dioxide.

3.  The power management method according to claim 2, wherein the controller executes processing including

    calculating an expected amount of power usage that is expected to be used in the plurality of areas;
    acquiring the power classification and amount of electric power for electric power stored in a storage battery connected to an electric circuit; and
    instructing the storage battery to discharge in a case in which the expected amount of power usage exceeds the amount of power supplied for at least one of the first classification of power and the second classification of power.

4.  The power management method according to claim 3, wherein the controller executes processing including instructing the storage battery to charge in a case in which the amount of power supplied exceeds the expected amount of power usage for both the first classification of power and the second classification of power.

5.  The power management method according to any one of claims 2 to 4, wherein the controller executes processing including

    setting a priority of allocation for at least one of the first classification of power and the second classification of power to each of the plurality of areas; and
    allocating the power classification that is lacking in order starting with an area with highest priority in a case in which the amount of power used exceeds the amount of power supplied for at least one of the first classification of power and the second classification of power.

6.  The power management method according to claim 1, wherein the controller executes processing including

    associating power supplied from the plurality of power sources with power allocated to each of the areas; and
    calculating an amount of carbon dioxide emissions derived from power in each area from an amount of power supplied from the plurality of power sources and allocated to each area and a carbon dioxide emission coefficient set for each power generation method or power company.

7.  The power management method according to claim 1, wherein the controller manages power supplied to an electric vehicle used in association with one area in the plurality of areas together with the amount of power of the one area.

8.  A power management apparatus for managing an amount of power supplied to a plurality of areas, the power management apparatus comprising:

    a controller configured to execute processing,
    wherein the plurality of areas includes one or more areas for which a power classification to be used on a priority basis is determined, the power classification being one of a plurality of power classifications determined based on a mode of carbon dioxide emissions during power generation,
    wherein the processing comprises:

    classifying power supplied from a plurality of power sources into any one of the power classifications;
    acquiring an amount of power supplied from each of the plurality of power sources;
    acquiring an amount of power used in each of the plurality of areas;
    allocating the amount of power supplied from each of the power sources to each of the plurality of areas based on the power classification to be used on a priority basis in the one or more areas and the amount of power used in each of the plurality of areas; and
    storing the power classification and the amount of power allocated to each area.

9.  An information processing system including a power management apparatus for managing an amount of power supplied to a plurality of areas,

    wherein the power management apparatus comprises a controller,
    wherein the plurality of areas includes one or more areas for which a power classification to be used on a priority basis is determined, the power classification being one of a plurality of power classifications determined based on a mode of carbon dioxide emissions during power generation,
wherein the controller executes processing comprising:

classifying power supplied from a plurality of power sources into any one of a plurality of the power classifications;
acquiring an amount of power supplied from each of the plurality of power sources;
acquiring an amount of power used in each of the plurality of areas;
allocating the amount of power supplied from each of the power sources to each of the plurality of areas based on the power classification to be used on a priority basis in the one or more areas and the amount of power used in each of the plurality of areas; and
storing the power classification and the amount of power allocated to each area.

# FIG. 1

| Storage battery | Power management apparatus | Measurement meter |

50
10
20

1

# FIG. 2

# FIG. 3

Power management apparatus 10

| | |
|---|---|
| Controller 11 | Input interface 14 |
| Memory 12 | Output interface 15 |
| Communication interface 13 | |

# FIG. 4

| No. | Area name | Power to be used on a priority basis | Priority |
|---|---|---|---|
| 1 | 1F (product A production line) | Green or blue | 1 |
| 2 | 2F (product B production line) | Green | 2 |
| 3 | 3F (product C production line) | Any type | |
| 4 | 4F (product D production line) | Green or blue | 3 |
| 5 | Electric vehicle (for shipping product A) | Green or blue | 4 |
| 6 | Electric vehicle (regular) | Any type | |

EP 4 679 656 A1

# FIG. 5

20

**Measurement meter**

21

Measurement unit

22

Communication interface

# FIG. 6

Power generation equipment — 40

Generator — 41

Measurement meter — 20

Storage battery — 50

Controller — 51

Memory — 52

Communication interface — 53

Electric power storage unit — 54

# FIG. 7

```
            ( Start )
                │
                ▼
┌─────────────────────────────────────┐
│ Acquire amount of power supplied to facility │ ～S101
│ and amount of power supplied for each power source │
└─────────────────────────────────────┘
                │
                ▼
┌─────────────────────────────────────┐
│   Calculate amount of power supplied of   │ ～S102
│        each power classification          │
└─────────────────────────────────────┘
                │
                ▼
┌─────────────────────────────────────┐
│  Acquire amount of power used in each area  │ ～S103
└─────────────────────────────────────┘
                │
                ▼
┌─────────────────────────────────────┐
│      Calculate amount of power used for      │ ～S104
│          each power classification           │
└─────────────────────────────────────┘
                │
                ▼
┌─────────────────────────────────────┐
│ Retrieve power classification to be used on │ ～S105
│    a priority basis and supply priority     │
└─────────────────────────────────────┘
                │
                ▼
< Amount of power supplied > amount of power used? >──No──┐
                │                                          │
               Yes                                         ▼
             S106                                  ┌──────────────────┐
                                                   │ Allocate green power │ ～S108
             S107                                  └──────────────────┘
                ▼                                          │
┌──────────────────────────┐                               ▼
│  Allocate power classification │                   ┌──────────────────┐
└──────────────────────────┘                         │ Allocate blue power │ ～S109
                │                                     └──────────────────┘
                │                                          │
                │                                          ▼
                │                                   ┌──────────────────┐
                │                                   │ Allocate gray power │ ～S110
                │                                   └──────────────────┘
                │                                          │
                ▼◄─────────────────────────────────────────┘
┌──────────────────────────────┐
│ Store allocated power classification │ ～S111
└──────────────────────────────┘
                │
                ▼
             ( End )
```

EP 4 679 656 A1

# *FIG. 8*

```
        ( Green power allocation processing )
                        |
                        v
  ┌─────────────────────────────────────────────┐
  │ Extract areas where only green power is to be used │──S201
  └─────────────────────────────────────────────┘
                        |
                        v
  ┌─────────────────────────────────────────────┐
  │ Allocate green power to extracted areas      │──S202
  └─────────────────────────────────────────────┘
                        |
                        v
  ┌─────────────────────────────────────────────────────┐
  │ Allocate green power to areas other than extracted areas │──S203
  └─────────────────────────────────────────────────────┘
                        |
                        v
                   ( Return )
```

# FIG. 9

EP 4 679 656 A1

| No. | Area name | Amount of power used | Power to be used on a priority basis | Priority |
|-----|-----------|---------------------|--------------------------------------|----------|
| 1 | 1F (product A production line) | 300kwh | Green or blue | 1 |
| 2 | 2F (product B production line) | 150kwh | Green | 2 |
| 3 | 3F (product C production line) | 200kwh | Any type | |
| 4 | 4F (product D production line) | 100kwh | Green or blue | 3 |
| 5 | Electric vehicle (for shipping product A) | 10kwh | Green or blue | 4 |
| 6 | Electric vehicle (regular) | 90kwh | Any type | |

# FIG. 10

| No. | Area name | Amount of power used | Power to be used on a priority basis | First required ratio | Priority | Second required ratio | Priority |
|---|---|---|---|---|---|---|---|
| 1 | 1F (product A production line) | 300kwh | Green or blue | 60% | 1 | 80% | 6 |
| 2 | 2F (product B production line) | 150kwh | Green | 70% | 2 | 85% | 3 |
| 3 | 3F (product C production line) | 200kwh | Any type | | | | |
| 4 | 4F (product D production line) | 100kwh | Green or blue | 40% | 4 | 75% | 7 |
| 5 | Electric vehicle (for shipping product A) | 10kwh | Green or blue | 65% | 5 | 65% | 8 |
| 6 | Electric vehicle (regular) | 90kwh | Any type | | | | |

EP 4 679 656 A1

# FIG. 11

```
        ( Start )
           │
           ▼
┌─────────────────────────────────────────────────────────────────┐
│ Allocate supplying power source and amount of power supplied      │──∿ S301
└─────────────────────────────────────────────────────────────────┘
           │
           ▼
┌─────────────────────────────────────────────────────────────────┐
│ Calculate amount of power generation-based carbon dioxide emissions in each area │──∿ S302
└─────────────────────────────────────────────────────────────────┘
           │
           ▼
┌─────────────────────────────────────────────────────────────────┐
│ Store amount of carbon dioxide emissions for each area            │──∿ S303
└─────────────────────────────────────────────────────────────────┘
           │
           ▼
        ( End )
```

# FIG. 12

```
          ┌─────────────┐
          │    Start    │
          └──────┬──────┘
                 │
                 ▼
  ┌──────────────────────────────────────┐
  │ Calculate expected amount of power usage │ ~S401
  └──────────────────┬───────────────────┘
                     │
                     ▼
  ┌──────────────────────────────────────┐
  │   Acquire amount of electric power of   │ ~S402
  │ storage battery and power classification │
  └──────────────────┬───────────────────┘
                     │
                     ▼                      S403
  ┌──────────────────────────────────────┐
  <      Amount of power supplied >        >  No
  <    expected amount of power usage?     >────────┐
  └──────────────────┬───────────────────┘          │
                     │ Yes                           │
                     ▼                               ▼
  ┌──────────────────────────┐     ┌──────────────────────────────────┐
  │ Instruct storage battery to charge │ ~S404  │ Instruct storage battery to discharge │
  └──────────────────┬───────┘     └───────────────┬──────────────────┘
                     │                              │ S405
                     ◄──────────────────────────────┘
                     ▼
          ┌─────────────┐
          │     End     │
          └─────────────┘
```

EP 4 679 656 A1

## INTERNATIONAL SEARCH REPORT

| International application No. |
|---|
| **PCT/JP2023/045367** |

---

**A. CLASSIFICATION OF SUBJECT MATTER**

*H02J 3/00*(2006.01)i; *G06Q 50/06*(2024.01)i; *H02J 3/38*(2006.01)i
FI:   H02J3/00 170; H02J3/00 180; G06Q50/06; H02J3/38 120

According to International Patent Classification (IPC) or to both national classification and IPC

**B. FIELDS SEARCHED**

Minimum documentation searched (classification system followed by classification symbols)

H02J3/00; G06Q50/06; H02J3/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/110920 A1 (NEC CORPORATION) 14 July 2016 (2016-07-14)<br>entire text, all drawings | 1-9 |
| A | JP 2015-211594 A (NEC CORPORATION) 24 November 2015 (2015-11-24)<br>entire text, all drawings | 1-9 |
| A | JP 2021-189566 A (NTT COMMUNICATIONS CORPORATION) 13 December 2021<br>(2021-12-13)<br>entire text, all drawings | 1-9 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/045367**

| Patent document cited in search report | | | Publication date (day/month/year) | Patent family member(s) | | | Publication date (day/month/year) |
|---|---|---|---|---|---|---|---|
| WO | 2016/110920 | A1 | 14 July 2016 | US | 2018/0005325 | A1 | |
| | | | | entire text, all drawings | | | |
| JP | 2015-211594 | A | 24 November 2015 | US | 2015/0309549 | A1 | |
| | | | | entire text, all drawings | | | |
| JP | 2021-189566 | A | 13 December 2021 | US | 2023/0206354 | A1 | |
| | | | | entire text, all drawings | | | |
| | | | | WO | 2021/241649 | A1 | |
| | | | | EP | 4160333 | A1 | |
| | | | | CN | 115668081 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023151529 A
- WO 2017013982 A1

- JP 2021189566 A